# EUROPEAN PATENT APPLICATION

(11) **EP 1 321 876 A2**
(43) Date of publication of application: **25.06.2003**
(21) Application number: 02028886.6
(22) Date of filing: 21.12.2002
(51) Int. Cl.: G06F 17/60

(54) **Rental equipment business system and method**

(30) Priority: 21.12.2001 US 340184 P; 20.12.2002 US 324132
(71) Applicant: Caterpillar Inc., Peoria Illinois 61629-6490 (US)
(72) Inventor: Bruch, Micheal, Peoria, Illinois 61629-6490 (US); Conrad, Bruce, Peoria, Illinois 61629-6490 (US); Feser, John M., Peoria, Illinois 61629-6490 (US); Janda, Steven R., Peoria, Illinois 61629-6490 (US); Roethler, Edward, Peoria, Illinois 61629-6490 (US)
(74) Representative: Wagner, Karl H., Dipl.-Ing.

(57) **Abstract**

A method and system are provided for processing rental transactions in an equipment rental business. Status information associated with the one or more pieces of equipment is automatically received. Based on this status information, a work function is planned for each piece of equipment, including one or more action items. A comparison is automatically made of the status information with a contract associated with the one or more pieces of equipment. Digital imaging and analysis may be used during this process to assess physical damage to the equipment. The method may be performed on-site at the rental business location or at a remote location.

## Description

### Technical Field

The present invention relates generally to rental equipment businesses and, more particularly, to a system and method for improving customer service and managing customer relationships in a rental equipment business.

### Background

Customer service is an important aspect of the rental equipment business. For example, a customer may want to be assured that the equipment they are renting will be ready for them to pick up or delivered to them at their requested time. Further, the customer may want to be assured that the rented equipment will be able to adequately perform its designated task reliably. It may also be important that the personnel in the rental equipment business be knowledgeable, both about the equipment itself and about a particular customer's rental. With any business, prompt service and competitive pricing are also key features.

Fulfillment of all of these features of customer service in the rental equipment business may be difficult. For example, rental equipment businesses may rent numerous pieces of large equipment, such as bulldozers or other machinery, as well as small equipment, such as jackhammers or air compressors. There may be many models and configurations of each piece of equipment. Further, there may be accessories that are rented or sold with various pieces of equipments, such as cords, hoses, or generators. Keeping track of this extensive and varied inventory may prove difficult, especially when paired with the task of monitoring of requests for and returns of the rental equipment to ensure that rental equipment is ready when requested. In addition to the variety in inventory, rental equipment may also require maintenance to improve reliability. Tracking of the rental equipment through the maintenance process, as well as monitoring required maintenance, may be cumbersome tasks.

One portion of the rental process, the checking-in of rented equipment, can affect many aspects of customer service. Specifically, in order to process the equipment to make it ready for the next rental, it is important to quickly and accurately ascertain the condition of the equipment and the tasks required to make the equipment ready for the next customer. Further, since maintenance may be done between rentals, the maintenance tasks may be scheduled upon check-in. However, since the customer may be present during the check-in procedure, having an efficient and prompt check-in procedure is important. The personnel of the rental equipment business should have access to knowledge both about the equipment being rented and the contracts associated with the rental transactions in order for the check-in procedure to run smoothly.

Currently available rental equipment business systems do not address all of the aspects of customer service as described above. For example, if equipment is delivered to the customer, most or all of the check-in and/or checkout procedures are done manually, for example, on paper. This not only leads to potential inaccuracies, but further is inefficient, as the information will often need to be entered multiple times, for example, once on the invoice and then again entered into a computer at the rental business location. Further, communication of action items within the rental business is often on an ad-hoc basis and lacks prioritization. Thus, workers may not know which tasks to complete first, or even which tasks to complete, leading to inefficiency and poor customer service. Further, in a typical rental equipment business, it is difficult to provide adequate documentation of damages, leading to inefficiencies and/or difficulties in completing repairs and/or getting reparations from the responsible party.

The present invention is directed to overcoming one or more of the problems or disadvantages associated with the prior art.

### Summary of the Invention

A method is provided for processing a rental transaction with a customer upon return of one or more pieces of equipment in an equipment rental business. Status information associated with the one or more pieces is received in an automated manner. A work function, including one or more action items, is planned for each piece of equipment, based on the status information. The status information is compared, in an automated manner, with a contract associated with the customer and the one or more pieces of equipment. The transaction is then closed with the customer based on the comparison.

Another method is provided for managing workflow in an equipment rental business. Status information associated with a piece of equipment is received in an automated manner. A work function, including one or more action items, is planned, based on the status information, wherein the work function is prioritized based on the status information.

Yet another method is provided for using a digital camera to monitor damage in an equipment rental business. Damage to a piece of equipment is photographed. The damage is monitored based on the photograph.

A method is provided for managing a relationship with a customer in an equipment rental business. Status information associated with a piece of equipment is received in an automated manner. The status information is compared to a contract associated with the customer and the one or more pieces of equipment. The customer is notified of the results of the comparison.

Further still, a method is provided for processing a rental transaction with a customer upon pick-up of one or more pieces of rental equipment at a location remote from an equipment rental business. Status information associated with the one or more pieces is received in an automated manner. The status information is compared, in an automated manner, with a contract associated with the customer and the one or more pieces of equipment. The transaction is then closed with the customer based on the comparison.

Yet another method is provided for processing a rental transaction with a customer. Transport data associated with one or more pieces of equipment is established. Status information associated with the one or more pieces of equipment is received, wherein the status information includes a location of the one or more pieces of equipment. A work function associated with the one or more pieces of equipment is planned, based on the established transport data and the received status information.

Further still, a method is provided for processing a rental transaction with a customer. Status information associated with the one or more pieces of equipment is received. A work function is planned in response to the status information, and an inventory management action is performed in response to the work function.

It is to be understood that both the foregoing general description and the following detailed description are exemplary and explanatory only and are not restrictive of the invention as claimed.

### Brief Description of the Drawings

The accompanying drawings, which are incorporated in and constitute a part of this specification, illustrate exemplary embodiments of the invention and together with the description, serve to explain the principles of the invention. In the drawings:
Fig. 1 is a block diagram of a rental equipment business system, consistent with an exemplary embodiment of the present invention; and
Fig. 2 is a flow chart illustrating a method for checking equipment into the rental equipment business upon return, consistent with an exemplary embodiment of the present invention.

### Detailed Description

Reference will now be made in detail to embodiments of the invention, examples of which are illustrated in the accompanying drawings. Wherever possible, the same reference numbers will be used throughout the drawings to refer to the same or like parts.

Fig. I illustrates a rental equipment business system 100, consistent with an exemplary embodiment of the present invention. Rental equipment business system 100 may include a rental business location 105. Rental business location 105 may include a gate 108, providing entry to rental business location 105. Rental business location 105 may also include a rental store 110, a sensor 120, a handheld device 130, and equipment 140.

Rental store 110 may include a planning board display 112, a computer 114, and a communication device 116. Planning board display 112 may provide a graphical representation of one or more of the key aspects of customer service and may be implemented via a monitor, LCD panel, or other display device capable of providing graphical information. For example, planning board display 112 may provide information about requests for rental equipment, such as equipment and time and/or day needed, information about the status of the equipment for each request, and/or information about customer service parameters, such as the percentage of on-time delivery and/or reliability measurements.

Planning board display 112 may be connected to computer 114. Computer 114 may be used to store rental request and customer service information. The stored information may then be provided to planning board display 112. Further, computer 114 may be used to input new rental request or alter existing rental request information or to input information pertaining to rental transactions. Computer 114 may also be used to calculate customer service parameters based on information gathered from rental requests and transactions, such as the percentage of on-time deliveries. Computer 114 may be implemented in various environments to provide tools for obtaining rental and customer service information and for providing the information to planning board display 112. Computer 114 may include hardware specifically constructed for performing various processes and operations of the invention or may include a general purpose computer or computing platform selectively activated or reconfigured by program code to provide the necessary functionality.

Computer 114 may also be connected to communication device 116. Communication device 116 may include a wireless communication receiver, such as a wireless modem. Alternatively, communication device 116 may include a satellite communication receiver, a hard-wire communication receiver, or other communication system capable of receiving signals. Communication device 116 may also be connected to the Internet, local area network (LAN), or other network, including a Bluetooth™ compatible network. Communication device 116 may receive information, such as the status of rental equipment, from sensor 120, a handheld device 130, a digital camera (not shown), equipment 140, and other on-board or off-board devices (not shown), such as optical monitoring or sensing devices or magnetic monitoring or sensing devices. Communication device 116 may provide this information to computer 114 for processing and display on planning board display 112.

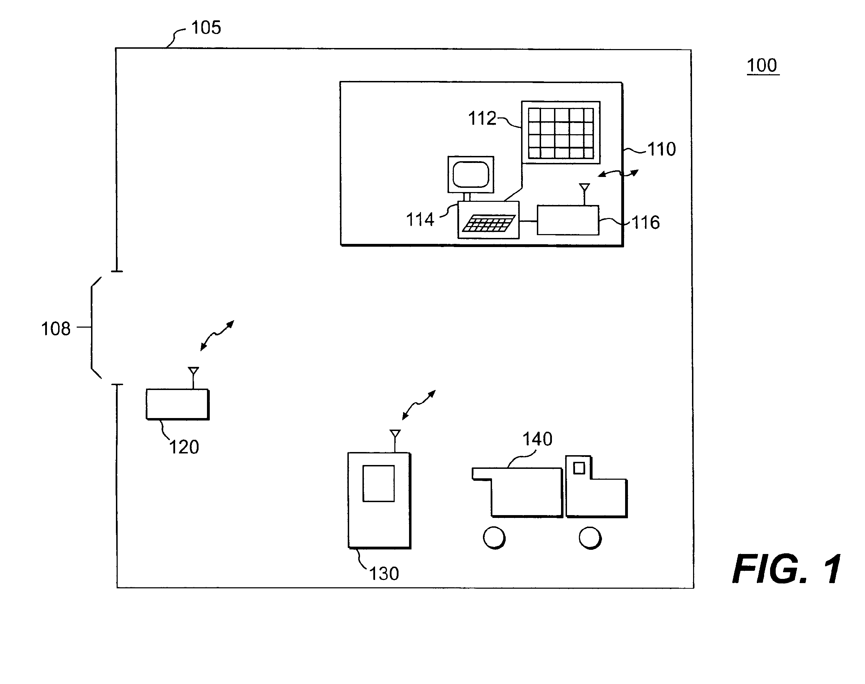

Sensor 120 may include any type of sensor for gathering information, such as, for example, a radio frequency identification tag (RFID), bar code reader, or wireless communication device associated with the equipment 140. Information gathered by sensor 120 may be sent by, for example, wireless technology, satellite communications, cellular communications, and/or radio frequency communications, to communication device 116. Although only one sensor 120 is shown in Fig. 1, it should be understood that rental business location 105 may include any number of sensors 120. For example, one sensor 120 may be located near gate 108, to sense equipment leaving or entering rental business location 105. Other sensors (not shown) may be located at maintenance stations or other locations throughout rental business location 105. For example, rental business location 105 may include, for example, a garage for equipment repair and a wash area for equipment cleaning. Sensors located at the garage and/or wash area may provide information about the location of a piece of equipment at one of these stations. Alternatively, sensors may be mobile and carried by personnel of the rental business, such as via handheld device 130 described below.

Handheld device 130 may be used by personnel working in the rental business location 105. Handheld device 130 may be a handheld computer, implemented using, for example, PALM or PocketPC technology and wireless capabilities. Personnel may use the handheld device to input information using, for example, a keypad or touch-screen. This information is then sent to communication device 116. Handheld device 130 may further include a sensor, such as an RFID reader or bar code reader. Personnel may use the sensor on the handheld device to gather information, which may then be transmitted to communication device 116. Handheld device 130 may further include a digital camera, either for acquiring photographs, video images, or other data. In addition, handheld device 130 may include a signature capture pad, on which a customer may sign with the signature being digitally captured. Handheld device 130 may also include a printer, or be capable of attachment to a printer.
Personnel may also be able to access information from planning board display 112 via handheld device 130. One exemplary embodiment of handheld device 130 is the Symbol 2800 model, which may include any or all of the above features. Although only one handheld device 130 is shown in Fig. 1, it should be understood that any number of handheld devices may be included in rental business location 105. For example, handheld devices may be carried by various personnel, such as clerks, maintenance workers, or other persons who may have or may gather information used by planning board display 112. Alternatively, handheld device 130 may be used by personnel outside of rental business location 105. For example, a delivery truck driver may use a handheld device for performing the check-in procedure at the customer's location. In one embodiment, the check-in information could be transmitted via wireless technology to and/or from rental business location 105 to and/or from handheld device 130 or may be stored in handheld device 130 until the delivery truck driver returned to rental business location 105, where the information may be batch transferred, for example, via a cradle synch device associated with computer 114, for example at rental store 110, or via a wireless LAN upon reentry at rental business location 105.

In one embodiment, where a delivery truck or other transport vehicle is used to drop off and/or pick up equipment for a customer, dispatch software may be used to facilitate these functions. Dispatch software installed on computer 114 may identify a transport vehicle, route, task list, and/or other information associated with the rented equipment. For example, an appropriately sized truck may be identified as a transport vehicle for a particular piece of equipment. One embodiment of the dispatch software may query characteristics of the equipment, such as weight, height, length, and width of the equipment and compare these characteristics to available transport vehicles. In another alternative, characteristics for each piece of equipment may be stored in memory and recalled when a transport vehicle is required for a piece of equipment. Another embodiment of the dispatch software may review and recommend appropriate transport for an order of multiple pieces of equipment. The dispatch software may determine what pieces of equipment may be collocated on a single transport vehicle, thereby decreasing the cost.

In another embodiment, dispatch software may review transport needs of multiple customers. For example, equipment for multiple customers in close proximity may be able to be collocated on the same transport vehicle, again decreasing the cost. Therefore, the characteristics of the equipment for multiple customers may be reviewed against the characteristics of one or more transport vehicles. In addition to the characteristics of the equipment, dispatch software may also determine the delivery needs of the customer, such as priority and delivery or pick up dates. Thus, even though one customer may be closer to the rental business location, a second customer located at a further distance may require his equipment sooner. Dispatch software may determine not only if collocation is possible, but also the order in which deliveries should be made.

In any case, dispatch software installed on computer 114 may work in conjunction with other elements of the rental equipment business system 100. For example, planning board display 112 may be updated to include information from dispatch software, such as the transport vehicle selected for the equipment and the delivery order. Further, information from sensor 120 and/or handheld device 130, including when a transport vehicle carrying equipment leaves the rental business location 105, may be provided to the dispatch software, enabling dispatch software to determine an estimated time of arrival at the drop off location. This estimated time of arrival may then be sent to the customer, for example, via e-mail or other communication method. Moreover, handheld device 130 may be used to provide additional location information about the transport and corresponding pieces of equipment, such as when the transport reaches a delivery destination, and the estimated time of arrival may be updated based on additionally received information. The estimated time of arrival may also be provided to planning board display 112. Similarly, dispatch software in conjunction with information from sensor 120 and/or handheld device 130 may be used to update the planning board with information such as that a transport vehicle has left rental business location 105, an estimated time until a piece of equipment is delivered, an estimated time until a piece of equipment is picked up, and/or an estimated time for a transport vehicle carrying picked-up equipment to return to rental business location 105.

Equipment 140 is defined broadly to include any equipment, product, or item that may be rented. For example, equipment 140 may include large equipment, such as bulldozers or other machinery, and/or small equipment, such as jackhammers or air compressors. Equipment 140 may also include accessories to be used with the large or small equipment. Further, equipment 140 may include furniture, office equipment, home improvement tools, appliances, vehicles, or other items needed for short- and/or long-term use. Equipment 140 may be stored at one or more locations in rental business location 105. Equipment 140 may also include RFID tags, bar codes, or other information tags. For example, equipment 140 may include an RFID tag, which when scanned by sensor 120, provides information relating to the identification of equipment 140 and/or information relating to the status and/or location of equipment 140. Information relating to the identification of the equipment may include, for example, the type of equipment, a serial number associated with the equipment, and/or information about the configuration of the equipment. Information relating to the status of the equipment may include the number of miles or hours that the equipment has been in operation and/or the equipment's maintenance records. Information relating to the location of the equipment may include the physical location of the equipment in the rental business location 105, the estimated arrival time of the equipment at a rental business location (if being returned), or the stall or bay in a storage location where the equipment is being stored. This information may be transmitted directly to communication device 116, or may be sensed using sensor 120 or handheld device 130, and subsequently sent to communication device 116.

An exemplary rental transaction using the rental equipment business system 100 is described as follows. A customer may enter rental store 110, or alternatively, may telephone a clerk at rental store 110, to request one or more pieces of equipment 140 for rental at a certain day and time. The clerk may enter details of the request into computer 114 and the request would then be reflected on planning board display 112. Alternatively, a customer may make an electronic request, for example, via a web site. The electronic request may then be processed by computer 114 and reflected on planning board display 112. For example, planning board display 112 may list the equipment requested by the customer, as well as the date and/or time the equipment is needed. If any status information about the equipment is available in computer 114, that information may also be represented on planning board display 112. For example, the equipment may be currently rented to a second customer and is due back before the first customer expects to pick up the equipment. Planning board display 112 may indicate the equipment's status via additional text (e.g., "rented until Tuesday"), color-coded text (e.g., red text means the equipment is off-site or rented), icon (e.g., a stop sign indicated that the equipment is not currently available), or some other visual means, such as flashing text, indicating the current status of the equipment.

In one embodiment, multiple pieces of equipment may be available for rental in a rental fleet. In this embodiment, planning board display 112 may indicate the status of all pieces of equipment (regardless of whether they have been requested). For example, planning board display 112 may indicate which pieces of equipment of the fleet are ready for rental and/or which pieces of equipment of the fleet are rented. Alternatively, planning board display 112 may indicate the status of all pieces of equipment that are available for rental, all pieces of equipment that are not currently rented, and/or a prioritized list of equipment not rented, wherein the prioritization may be based on a projected availability for each piece of equipment.

When the second customer returns the equipment, sensor 120 may sense that the equipment has entered rental business location 105, for example, via an RFID tag on the equipment, and send that information to communication device 116, which provides the information to computer 114. Computer 114 may use this information to update planning board display 112, both as to the second customer's rental status (e.g., returned) and as to the first customer's rental status (e.g., equipment on-site, not ready to be rented). Sensor 120 may also obtain information from an RFID tag, associated with various systems in the equipment. For example, sensor 120 may determine the number of hours an engine was in use based on an RFID tag connected to the alternator in the engine system. Sensor 120 may also determine the amount of fuel that has been used based a connection between the RFID tag and the fuel tank. Equipment 140 may have one or more RFID tags. If one RFID tag is used, the RFID tag may be connected to one or more systems within the piece of equipment 140. Alternatively, equipment 140 may have multiple RFID tags, each associated with one or more system. In another embodiment, the equipment may be checked in by a clerk using handheld device 130. In this embodiment, information may be obtained by sensor, as described above, or may be determined and inputted by the clerk. In yet another embodiment, the equipment may be picked up from the second customer by a delivery personnel. The delivery personnel may use handheld device 130 to update the status of the equipment when picking it up from the second customer's location.

Handheld device 130 may also be used to provide an inspection checklist. For example, handheld device 130 may display a checklist to be completed by a clerk when checking the equipment in. Further, handheld device 130 may include a digital camera for taking photographs or video images of any possible damage to the equipment. In an alternative embodiment, handheld device 130 may receive data from a digital camera. Handheld device 130 may then forward the photograph or images to communication device 116 for attaching to the invoice and/or performing a manual or digital analysis to compare the current damage to a stored image or record of the equipment prior to rental. Alternatively, handheld device 130 may perform digital analysis of the images, for example, to determine if any damage occurred, and if so, the extent of the damage. In addition, if damage has occurred, handheld device 130 may establish whether repair is needed. If repair is needed, handheld device 130 may schedule the repair. In yet another embodiment, handheld device 130 may communicate any or all of the information about the analysis of the image to computer 114 for recording and/or further processing. Handheld device 130 may also be used to capture a signature of the customer acknowledging the damage. Handheld device 130 may also be used to compare the equipment returned to that listed on the rental contract. For example, if a number of items were rented and only a few of the items were returned, handheld device 130 may indicate a partial return status.

Rental business personnel may then prepare the returned equipment for the next rental. For example, using handheld device 130, a maintenance person may determine information about the equipment, such as, for example, if any maintenance is required before the next rental, as well as information about the next customer. Handheld device 130, for example, may indicate that the vehicle needs to be washed and/or have an oil change before the next rental. Handheld device 130 may also indicate that the vehicle is needed for rental tomorrow and that an accessory item is also to be rented with the equipment to the first customer. Handheld device 130 may also prioritize the work to be done on the equipment. Alternatively, computer 114 may prioritize the work. For example, the prioritization may be based on the damage to the equipment (possibly necessitating the ordering of parts), the number of units of the same piece of equipment already available, the number of units of the same piece of equipment that are needed for rental tomorrow, the past rental utilization of a piece of equipment (e.g., if they are frequently rented on short notice), the pick-up time for the next rental, the profit available by renting the equipment, the extent or severity of any repairs or maintenance needed and/or the preventative maintenance schedule of the equipment. If multiple actions are due, for example an oil change as well as a wash, handheld device 130 may display a prioritized list of action items.

In one embodiment, once information about required maintenance is determined and a particular maintenance action is identified, a list of parts or other supplies necessary to perform the maintenance action may be established. The list may be established manually, for example, by a maintenance worker, or may be established automatically by computer 114, based on the identified action. Once the list is established, computer 114 may query an inventory of supplies in order to determine if the parts are available. Further, computer 114 may determine an action for a work function such that the required parts are moved to an appropriate maintenance location. For example, a maintenance worker may be provided a work function that involves obtaining a list of parts from a storage area and moving the parts to a particular bay in a maintenance garage. Computer 114 may also update inventory levels appropriately. In one embodiment, the system may identify items of inventory to be restocked and prompt an operator to review the inventory, for example, when a threshold level is reached. Alternatively, computer 114 may automatically place an order for a part that falls below a certain threshold of inventory.

Following the identification of a work function for the returned piece of equipment, the maintenance worker may then move the equipment to a wash area or other work location. At the wash area, there may be a sensor 120 to update computer 114 with the equipment's location. In this case, when the equipment leaves the wash area, the sensor 120 may sense the exit and further indicate to computer 114 that the washing of the equipment is complete. Alternatively, the maintenance worker may update the status of the equipment via handheld device 130. Similarly, after the vehicle has been washed, and any other maintenance performed, any indicated accessory may be paired with the equipment. This information is also updated in computer 114 via handheld device 130 or sensor 120. After any update of computer 114, planning board display may be updated to reflect the new status. When it has been indicated that the equipment is ready for rental, that information is also updated and displayed. The planning board display may also be updated to reflect the availability of equipment based on the time expected to prepare the equipment for its next use. Additionally, if equipment is due to be delivered, the customer may be notified to the estimated arrival time of the delivery vehicle, for example, via telephone, e-mail, or other communication method. Estimated arrival time and/or other information about the rental and/or delivery of equipment may be implemented using available dispatching or routing software.

When the first customer comes to pick up the equipment, information about the pick up may be entered into computer 114 by a clerk in rental store 110. Information entered may include the time that the customer picks up the equipment. Alternatively, sensor 120 may sense when the equipment leaves gate 108 and send the exit information to communication device 116 to be forwarded to computer 114. Computer 114 may compare the equipment sensed as leaving with that on a contract associated with the rental to ensure that the proper equipment has been taken. The return of the equipment by the first customer would be similar to that described above with respect to the second customer.

Computer 114 may also calculate customer service parameters based on information received during rental transactions. For example, because the time each rental is expected to be picked up is entered when the equipment rental request is taken, and the status of the vehicle as "ready to be rented" is updated as well, it is possible to determine what percentage of equipment pieces are ready prior to the time they are to be picked up. Additionally, it is possible to track the maintenance record of the equipment, such as regular oil and/or parts changes. Computer 114 may monitor reliability by determining the number of disabled machines, for example, by counting the number of work orders required in the field or machine swaps requested. The reliability may then be calculated as the percentage of rentals not subject to work orders or swaps. Other customer service parameters, such as average recycle time or average transaction time of a customer in rental store 110 may also be calculated. Average recycle time may be calculated by determining the average time required between the return of a piece of equipment until that equipment is ready for rental to the next customer. Customer service parameters may be displayed on planning board display 112 or handheld device 130 to encourage quality customer service by employees.

As described above, an accessory item or work tool may be rented or sold in conjunction with the equipment 140. There may be instances when a piece of equipment 140 needs a particular configuration, such as, for example, a software configuration, to efficiently operate the work tool. In one exemplary embodiment, when the equipment 140 and work tool leave the rental business location 105, sensors 120 may sense the leaving of both the equipment 140 and work tool and forward this information, via communication device 116, to computer 114. Computer 114 may then determine what configuration, such as, for example, what software version, is required by equipment 140 to utilize the work tool. Computer 114 may then communicate with equipment 140, for example, using wireless communication, to determine if equipment 140 has the appropriate software loaded. For example, an electronic control module (ECM) on the equipment 140 may be queried by computer 114 to determine if the appropriate software is loaded. The ECM may respond, for example, via a wireless communication link, and provide the version number of the currently loaded software. In one embodiment, if the currently loaded software version is not appropriate, computer 114 may transmit appropriate software, for example, via communication device 116, to equipment 140 and particularly, to the ECM. In this manner, appropriate software loads may be maintained. Alternatively, computer 114 may transmit appropriate software configurations to the ECM. Further, computer 114 and/or equipment 140 may reconfigure other settings, such as hydraulic or engine configurations.

Further, an accessory or work tool may be rented or sold for use with a piece of equipment that has already been rented. In this embodiment, for example, when sensor 120 determines that the work tool has left rental business location 105, computer 114 may check to see with which piece of equipment the customer intends to use the work tool. For example, the rental or purchase equipment may indicate with which piece of equipment the customer intends to use the work tool. Computer 114 may then communicate with the piece of equipment 140, which is located remotely at the customer, for example, via communication device 116, to determine what software version is available on equipment 140. Similarly as described above, computer 114 may query equipment 140, and in particular, an ECM on equipment 140, and may transmit the appropriate software version if required. In an alternative embodiment, if the software version loaded is not appropriate, computer 114 may notify a service agent, sales agent, or other representative of the rental business to provide the appropriate software to the equipment, for example, using an electronic service tool.

In another exemplary embodiment, equipment 140 may query the work tool to determine what the work tool is. The query may occur, for example, when the work tool and equipment 140 are attached, at the request of an operator, or when the work tool is placed within a certain proximity of the equipment 140. For example, equipment 140 may query the work tool to determine what the work tool is, and then, may check to see if the work tool is intended for use with equipment 140. Equipment 140 may include on-board information to determine if the work tool is intended for use with it, or alternatively, may communicate with computer 114. Once equipment 140 determines that the work tool is to be configured with equipment 140, equipment 140 may determine if it has the appropriate software to interact with the work tool. If equipment 140 does not have the appropriate software, it may request the software from computer 114, for example, via wireless communication. Computer 114 may then respond by transmitting the appropriate software to an ECM on equipment 140.

In another exemplary embodiment, equipment 140 and/or work tool may use a single RFID tag to assist with both equipment tracking and equipment configuration functions. For example, a single tag associated with a work tool may transmit information regarding the identification of the type of work tool, equipment with which it is configurable, what software is required to use the tool, and any other status or tracking information that may be associated with the tool.

In another embodiment, computer 114 stores information associated with each software version currently loaded on one or more pieces of equipment 140. When computer 114 receives information from, for example, an RFID tag attached to a piece of equipment 140, computer 114 may detect what piece of equipment is moving and potentially, what software is needed for the equipment. In either case, computer 114 may associate the information with a particular work tool the equipment will be configured with, for example, based on information associated with the rental or purchase agreement. Computer 114 may further determine what software version is needed, determine if the equipment has the required software version, and deliver software if needed. Computer 114 may maintain information about the software loaded on each piece of equipment, for example, by maintaining a table.

In another embodiment, information associated with a work tool may be monitored as the work tool enters or leaves rental business location 105. For example, information monitored may include hours of usage, torque applied to the work tool, horse power utilized while operating the work tool, diagnostic codes, and any other information about the operation of the work tool that may be stored during the operation, for example, in one or more ECMs associated with the work tool. As the equipment 140 and/or work tool enter rental business location 105, information may be transmitted to computer 114 via sensors 120. Computer 114 may track tool usage and determine whether any action items are needed with respect to the work tool. Further, the information may be analyzed to determine if any misuse occurred to the tool, such as driving the tool with too much torque. If so, a customer service representative may be notified to discuss the misuse and/or proper work tool use with the customer. This information associated with a work tool may also be stored in computer 114 to compile a service history or to use in future analysis, such as prognostics or maintenance scheduling. The stored information may include, for example, hours of use, types of use, and/or any issues associated with severity of use.

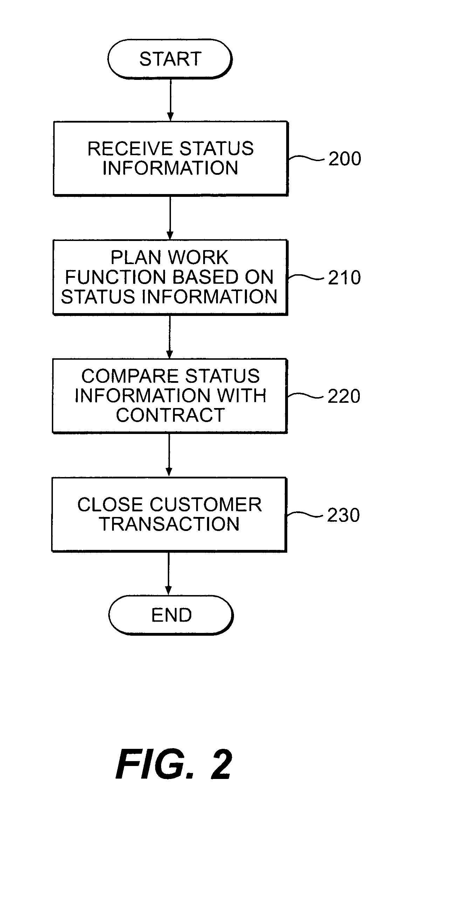

Fig. 2 is a flow chart illustrating a method of checking equipment in, consistent with an exemplary embodiment of the present invention. The method may be performed when a piece of equipment is returned to the rental business location. Alternatively, a person, such as a delivery truck driver, maintenance person, or sales or lease agent, may perform one or more of the following steps remotely, at the location where the equipment is picked up. When a piece of equipment is checked in, status information about the vehicle is received in an automated manner (step 200). As used in throughout this description, automatically means without an operator performing the task. Tasks performed automatically or in an automated manner, however, may require some interaction with an operator. For example, an input from an operator may be needed in order for the task to begin. Alternatively, or in addition to, the operator may be prompted to continue, respond to questions, or in some other manner interact with the system. Further, automatically does not necessarily mean occurring immediately. For example, there may be some delay, lapse in time, or other issue that may make it such that all tasks do not occur immediately.

In one embodiment, status information may be obtained from RFID tags. The RFID tags may indicate general information about the equipment, such as identification information, or may indicate information about a particular system in the equipment. For example, an RFID tag may be associated with the fuel tank and will determine the amount of fuel used.
Another RFID tag may be associated with the engine control system and may determine the number of hours the engine was in use. RFID tags and/or wireless LAN devices may also be able to provide maintenance information about equipment systems, for example, by providing diagnostic information, such as a fault code or prognostic information, such as a service-needed code.

Based on the status information, a work function is planned (step 210). In one embodiment, when status information is received, a work function may be planned. For example, when a piece of equipment has been identified as returned, an employee of the equipment rental business may be alerted to process the equipment through, for example, a page. The employee may also be provided with a work function, or check list, of items to be performed on the equipment. The work function may be prioritized. For example, if a diagnostic RFID tag indicates that an oil change is due, the check list of items for the employee may indicate that task. Alternatively, an RFID tag may send information about the number of hours of usage of the equipment to computer 114. Computer 114 may then compare the hours of usage with maintenance records indicating the usage-hours associated with the equipment's last oil change. Computer 114 may then determine that an oil change is due if a predetermined amount of usage-hours have elapsed since the last oil change. The work function may also include the task of refueling the equipment, or otherwise replacing fungible portions of the equipment. Information about the amount of fuel or other fungible goods may be recorded. The work function may also include retrieving an inspection checklist for the piece of equipment. The employee may then use the checklist for inspecting the equipment, for example, for wear-and-tear, damage, or misuse. Alternatively, the work function may include the task of determining whether physical damage is present. If physical damage is present, the damage may be photographed, and the photo incorporated with the invoice or analyzed to determine the extent of the damage and determine if repairs are needed. Photos incorporated with the invoice may be sent to computer 114 for storage and/or may be sent to another employee, such as a service manager or a customer service representative, for further action. Further, if repairs are needed, the repairs may be scheduled. The work function may also include the task of determining and scheduling any required or suggested preventative maintenance.

The retrieved status information may also be compared with a contract associated with the transaction (step 220). For example, the identification of the pieces rented may be matched against those pieces returned. Further, the amount of fuel in the equipment at the time of rental may be compared to that upon return. Based on this comparison, any discrepancies may be automatically noted on the invoice. Alternatively, discrepancies may trigger a notification being forwarded to a salesman or other personnel so that the customer can be notified as well. In one embodiment, the comparison may occur in an automated manner. In yet another embodiment, the method may include managing a relationship with a customer by notifying the customer of the results of the comparison.

In addition, the customer transaction is closed (step 230). For example, the customer may be given a final version of the invoice, which may include the results of the comparison. Alternatively, the invoice or results may be mailed, sent via e-mail, or otherwise electronically reported to the customer. If damage has been determined, the customer may sign either a signature pad or the invoice to acknowledge the damage.

### Industrial Applicability

Systems and methods are thus provided for improving customer service and managing customer relationships. Specifically, one or more key aspects of customer service may be enhanced. The ability to provide for on-time delivery of equipment is enhanced through automated tracking of the equipment, as well as automated monitoring of equipment maintenance. Further, datability is enhanced because the handheld devices provide a prioritized "to-do" list that helps employees to focus their attention on more urgent tasks easily. Prioritization may lead to not only datability, but also prompt customer service. Reliability is also enhanced by the automated monitoring of equipment maintenance. Faster customer service and more knowledgeable personnel result from the efficient communication of information made possible by the system. Additionally, much of the check-in procedure is automated, also providing for prompt customer service.

Further, the automated check-in procedure enhances the ability of the employees of the equipment rental business to manage customer relationships. For example, using a handheld device to photograph damage permits a salesperson to discuss the damage with the customer. This may lead to a better relationship with the customer and may further increase the likelihood of obtaining reparation for the damage. In addition, the procedure also indicates partial return, or when some but not all equipment in a transaction has been returned. This also permits the salesperson to notify the customer at the time, again leading to a more effective relationship with the customer.

It will be readily apparent to those skilled in this art that various changes and modifications of an obvious nature may be made, and all such changes and modifications are considered to fall within the scope of the appended claims. Other embodiments of the invention will be apparent to those skilled in the art from consideration of the specification and practice of the invention disclosed herein. It is intended that the specification and examples be considered as exemplary only, with a true scope and spirit of the invention being indicated by the following claims and their equivalents.

## Claims

1. A method of processing a rental transaction with a customer upon return of one or more pieces of equipment in an equipment rental business, the method comprising:
receiving status information associated with the one or more pieces of equipment in an automated manner;
planning a work function for one or more of the pieces of equipment, the work function including one or more action items based on the status information, wherein the planned work function is prioritized based on the status information; and
comparing the status information with a contract associated with the customer and the one or more pieces of equipment in an automated manner.

2. The method of claim 1, wherein the step of receiving status information includes:
obtaining status information using a radio frequency identification (RFID) sensor, wherein RFID tags are associated with one or more systems in each piece of equipment.

3. The method of claim 1, wherein the status information includes one or more of the following: identification information, usage information, and maintenance information.

4. The method of claim 3, wherein the usage information includes one or more of the following: hours of usage, mileage, and fuel usage.

5. The method of claim 1, wherein the step of planning a work function for each piece of equipment includes:
alerting an employee of the equipment rental business to process the one or more pieces of equipment.

6. The method of claim 1, wherein the step of planning a work function for each piece of equipment includes:
providing a checklist of action items to an employee of the equipment rental business for each of the one or more pieces of equipment.

7. The method of claim 1, wherein the one or more action items includes:
refueling the one or more pieces of equipment; and
recording information about an amount of fuel used in refueling.

8. The method of claim 1, wherein the one or more action items includes:
automatically retrieving an inspection checklist for the one or more pieces of equipment; and
inspecting the one or more pieces of equipment based on the inspection checklist.

9. The method of claim 1, wherein the one or more action items includes:
determining whether physical damage is present on the one or more pieces of equipment.

10. The method of claim 9, further including:
digitally photographing the determined physical damage.

11. The method of claim 10, further including:
attaching the digital photograph to an invoice associated with the transaction.

12. The method of claim 10, further including:
retrieving stored digital images of the one or more pieces of equipment; and
comparing the digital photograph to the stored digital images to determine an amount of physical damage.

13. The method of claim 12, further including:
determining repairs to be performed, based on amount of physical damage.

14. The method of claim 13, further including:
scheduling determined repairs.

15. The method of claim 10, wherein the digital photograph is electronically communicated to the rental business location.

16. The method of claim 9, further including:
obtaining a signature from a customer acknowledging the physical damage.

17. The method of claim 1, wherein the step of planning a work function for each piece of equipment includes:
determining, based on the status information, if preventative maintenance is required; and
scheduling the determined preventative maintenance.

18. The method of claim 1, wherein the step of comparing the status information with a contract includes:
comparing an identification of each of the one or more pieces of equipment with rented equipment listed in the contract.

19. A method of managing workflow in an equipment rental business, the method comprising:
receiving status information associated with a piece of equipment in an automated manner; and
planning a work function for the piece of equipment including one or more action items based on the status information, wherein the action items are prioritized based on the status information.

20. The method of claim 19, wherein priority is further based on one or more of the following: damage to a piece of equipment, extent of required service, units of available equipment, units of equipment scheduled to be rented, past rental utilization, time for delivery of equipment, dollar value of rental, and preventative maintenance scheduled.

21. A method of using a digital camera to monitor damage in an equipment rental business, the method comprising:
photographing damage to a piece of equipment; and
assessing damage to the piece of equipment based on the photograph.

22. The method of claim 21, wherein the step of assessing damage includes:
attaching the photograph to an invoice associated with rental of the piece of equipment.

23. The method of claim 21, wherein the step of assessing damage includes:
comparing the photograph to previously stored photographs to determine an amount of damage.

24. The method of claim 21, further including:
determining repairs to be performed, based on amount of physical damage.

25. The method of claim 21, further including:
scheduling determined repairs.

26. The method of claim 21, wherein the step of assessing damage includes:
storing the photograph for reference purposes.

27. A method of managing a relationship with a customer in an equipment rental business, the method comprising:
receiving status information associated with the one or more pieces of equipment in an automated manner;
comparing the status information with a contract associated with the customer and the one or more pieces of equipment; and
notifying at least one of the customer and a service representative of results of the comparison.

28. A method of processing a rental transaction with a customer upon pick-up of one or more pieces of rental equipment at a location remote from an equipment rental business, the method comprising:
receiving status information associated with the one or more pieces of equipment at the location remote from the equipment rental business in an automated manner; and
comparing the status information with a contract associated with the customer and the one or more pieces of equipment in an automated manner.

29. The method of claim 29, further including:
closing the transaction with the customer at the location remote from the equipment rental business based on the comparison.

30. The method of claim 29, further including:
electronically communicating the status information to the equipment rental business.

31. The method of claim 29, further including:
storing the status information;
downloading the stored status information at the equipment rental business.

32. The method of claim 29, further including:
determining, at a location remote from an equipment rental business, whether physical damage is present on the one or more pieces of equipment.

33. The method of claim 32, further including:
digitally photographing, at a location remote from an equipment rental business, the determined physical damage.

34. The method of claim 33, further including:
attaching the digital photograph to an invoice associated with the transaction.

35. The method of claim 33, further including:
retrieving stored digital images of the one or more pieces of equipment; and
comparing the digital photograph to the stored digital images to determine an amount of physical damage.

36. The method of claim 33, wherein the digital photograph is electronically communicated to the rental business location.

37. A method of processing a rental transaction with a customer for delivery of one or more pieces of rental equipment at a location remote from an equipment rental business, the method comprising:
obtaining an invoice associated with the rental transaction; confirming that the one or more pieces of rental equipment are present on one or more delivery vehicles in an automated manner;
delivering the one or more pieces of rental equipment to the customer; and
receiving acknowledgement of receipt of the one or more pieces of rental equipment from the customer.

38. A method of processing a rental transaction with a customer upon request for a work tool associated with a piece of equipment in an equipment rental business, the method comprising:
obtaining information about the work tool in an automated manner;
determining a configuration of the piece of equipment associated with the work tool; and
configuring the piece of equipment, if necessary, based on the determined configuration.

39. The method of claim 38, wherein the step of determining a configuration of the piece of equipment includes:
querying an electronic control module (ECM) associated with the piece of equipment.

40. The method of claim 38, wherein the step of determining a configuration of the piece of equipment includes:
determining a software configuration associated with the piece of equipment.

41. The method of claim 40, wherein the step of configuring the piece of equipment includes:
providing a required software configuration to the piece of equipment.

42. The method of claim 41, wherein the required software configuration is provided via wireless transmission.

43. The method of claim 41, wherein the required software configuration is provided via electronic service tool.

44. The method of claim 38, wherein the step of determining a configuration of the piece of equipment associated with the work tool is performed at a location remote from the equipment rental business.

45. The method of claim 38, wherein the step of obtaining information about the work tool in an automated manner is performed by the piece of equipment.

46. The method of claim 38, wherein the step of obtaining information about the work tool in an automated manner includes:
determining an identification of the work tool.

47. A method of processing a rental transaction with a customer, comprising the steps of:
establishing transport data associated with one or more pieces of equipment;
receiving status information associated with the one or more pieces of equipment, the status information including a location of the one or more pieces of equipment; and
planning a work function associated with the one or more pieces of equipment based on the established transport data and the received status information.

48. The method of claim 47, wherein the established transport data includes at least one of: transport vehicle, collocatable pieces of equipment, delivery route, estimated drop off time, and estimated pick up time.

49. A method of processing a rental transaction with a customer, comprising the steps of:
receiving status information associated with the one or more pieces of equipment;
planning a work function in response to said status information; and
performing an inventory management action in response to the work function.

50. The method of claim 49, wherein the step of planning a work function includes determining a maintenance action to be performed, and wherein the step of performing an inventory management step includes:
identifying one or more supplies required for performing the maintenance action; and
determining an inventory level of the identified supplies.

51. The method of claim 50, further including:
updating the inventory level of the identified supplies following the performance of the maintenance action.

52. The method of claim 51, further including:
establishing a reorder action when the updated inventory level of the identified supplies falls below a threshold value.
